# EUROPEAN PATENT APPLICATION

(11) **EP 4 230 668 A1**
(43) Date of publication of application: **23.08.2023**
(21) Application number: 23152416.6
(22) Date of filing: 19.01.2023
(51) Int. Cl.: C08F 283/01, C08G 59/16, C08G 59/14, C08G 63/48, C08L 51/08, C08L 63/10, C08L 67/08, C09D 151/08, C09D 163/10, C09D 167/08, C08F 290/14, C08G 59/32, C08K 3/22, C08K 3/26

(54) **EPOXY ESTER RESIN, VINYL-MODIFIED EPOXY ESTER RESIN, RESIN COMPOSITION, PAINT, AND ARTICLE COATED WITH THE PAINT**

(30) Priority: 22.02.2022 JP 2022025536
(71) Applicant: DIC Corporation, Tokyo 174-8520 (JP)
(72) Inventor: NAKAZAWA, Daisuke, Chiba 290-8585 (JP); ODASHIMA, Takayuki, Chiba 290-8585 (JP)
(74) Representative: Gerauer, Marc Philippé

(57) **Abstract**

Provided are an epoxy ester resin and a vinyl-modified epoxy ester resin capable of obtaining a resin composition in which a pigment is sufficiently dispersed even when a pigment having low dispersibility is used, and forming a coating film having excellent gloss. An epoxy ester resin having a polymerizable unsaturated group and a condensed alicyclic structure, and a vinyl-modified epoxy ester resin having a condensed alicyclic structure containing the epoxy ester resin and a polymerizable monomer as reaction components, in which a mass ratio [(epoxy ester resin):(polymerizable monomer)] of the epoxy ester resin having a polymerizable unsaturated group and a condensed alicyclic structure to the polymerizable monomer is in a range of 20:80 to 80:20.

## Description

### TECHNICAL FIELD

The present invention relates to an epoxy ester resin, a vinyl-modified epoxy ester resin, a resin composition, a paint, and an article coated with the paint.

### BACKGROUND ART

Volatile organic compound (VOC) regulations are being strengthened in the United States, Europe, China, and other countries as air pollution countermeasures, and for paints that use large amounts of volatile organic compounds such as toluene, xylene, and ethyl acetate as solvents, there is a demand for water-based paints that do not use these organic solvents or reduce use of these organic solvents.

While there is a demand for water-based paints, in paints used for buildings, ships, aircraft, and the like, since a coating film is exposed to rainwater, water resistance and corrosion resistance are required, and when it is painted outdoors, there is also a demand for room-temperature drying properties that do not require heating.

As a room temperature drying water-based paint that can be used as a paint for buildings, ships, aircraft, and the like, a paint obtained by oxidatively polymerizing carbon-carbon unsaturated double bonds in a resin skeleton with a metal complex compound has been proposed (PTL 1).

### Citation List

### Patent Literature

PTL 1: JP-A-2006-124658

### SUMMARY OF INVENTION

### Technical Problem

The water-based paint is a paint in which a resin is dissolved or dispersed in an aqueous medium, but since the water-based paint is generally inferior in drying properties and corrosion resistance compared to a solvent-based paint, extender pigments such as calcium carbonate are often blended for the purpose of improving the drying properties, and rust preventive pigments such as metal chromates and metal phosphates are often blended for the purpose of improving the corrosion resistance.

However, the extender pigment and the rust preventive pigment have poor dispersibility, and when the extender pigment and/or the rust preventive pigment are used in the water-based paint, there is a problem that pigment dispersion is insufficient, and fine unevenness occurs on a surface of the coating film, resulting in a decrease in gloss of the coating film. In addition, there is also a problem of stability over time, such as sedimentation and separation of pigment components in the paint during storage. This problem is not limited to the water-based paint, but also occurs in the solvent-based paint.

A problem to be solved by the present invention is to provide an epoxy ester resin and a vinyl-modified epoxy ester resin capable of obtaining a resin composition in which a pigment is sufficiently dispersed even when a pigment having low dispersibility is used, and forming a coating film excellent in glossiness and/or corrosion resistance.

Another problem to be solved by the present invention is to provide a resin composition and a paint capable of forming a coating film having excellent glossiness and/or corrosion resistance.

### Solution to Problem

As a result of intensive studies to solve the above problems, the present inventors have found that by using an epoxy ester resin introduced with a condensed alicyclic structure, the resin composition can be obtained in which the pigment is sufficiently dispersed even when the pigment having low dispersibility is used, and completed the present invention.

That is, the present invention relates to (1) an epoxy ester resin having a polymerizable unsaturated group and a condensed alicyclic structure, and (2) a vinyl-modified epoxy ester resin having a condensed alicyclic structure containing the epoxy ester resin and a polymerizable monomer as reaction components, in which a mass ratio [(epoxy ester resin):(polymerizable monomer)] of the epoxy ester resin having a polymerizable unsaturated group and a condensed alicyclic structure to the polymerizable monomer is in a range of 20:80 to 80:20.

### Advantageous Effects of Invention

According to the present invention, it is possible to provide an epoxy ester resin and a vinyl-modified epoxy ester resin capable of obtaining a resin composition in which a pigment is sufficiently dispersed even when a pigment having low dispersibility is used, and forming a coating film excellent in glossiness and/or corrosion resistance.

According to the present invention, it is possible to provide a resin composition and a paint capable of forming a coating film having excellent glossiness and/or corrosion resistance.

### DESCRIPTION OF EMBODIMENTS

Hereinafter, an embodiment of the present invention will be described. The present invention is not limited to the following embodiment, and can be implemented with appropriate modifications within a range that does not impair the effects of the present invention.

### [Epoxy ester resin]

An epoxy ester resin of the present invention is an epoxy ester resin having a polymerizable unsaturated group and a condensed alicyclic structure.

A bisphenol type epoxy ester resin is generally used as the epoxy ester resin used in paint, but in the present invention, by using an epoxy ester resin having a condensed alicyclic structure, pigment dispersibility can be improved.

The epoxy ester resin having a polymerizable unsaturated group and a condensed alicyclic structure of the present invention is preferably a reaction product of an epoxy resin having a condensed alicyclic structure and unsaturated fatty acid, or a reaction product of an epoxy resin having a condensed alicyclic structure, unsaturated fatty acid, and polyvalent carboxylic acid.

Condensed alicyclic structures such as dicyclopentadiene, tricyclodecane (tetrahydrodicyclopentadiene), norbornene, adamantane, and tetrahydroindene generally have bent adjacent ring structures, and it is presumed that the condensed alicyclic structure of the epoxy ester resin obtained by reacting monomers having these structures can efficiently adsorb to a surface of pigment particles, to improve the pigment dispersibility.

Note that in a bisphenol structure, since two benzene rings repel each other due to steric hindrance, it is presumed that adsorption to the pigment particles is partial.

The epoxy resin is a resin having at least one epoxy group in the molecule, and the epoxy resin having a condensed alicyclic structure is preferably a dicyclopentadiene type epoxy resin having a dicyclopentadiene structure.

Note that in the present application, "dicyclopentadiene-type epoxy resin" refers to an epoxy resin having a plurality of epoxy groups and a tricyclodecane (tetrahydrodicyclopentadiene) skeleton derived from dicyclopentadiene in the molecule.

The dicyclopentadiene type epoxy resin is preferably a dicyclopentadiene type epoxy resin represented by the following general formula (1). 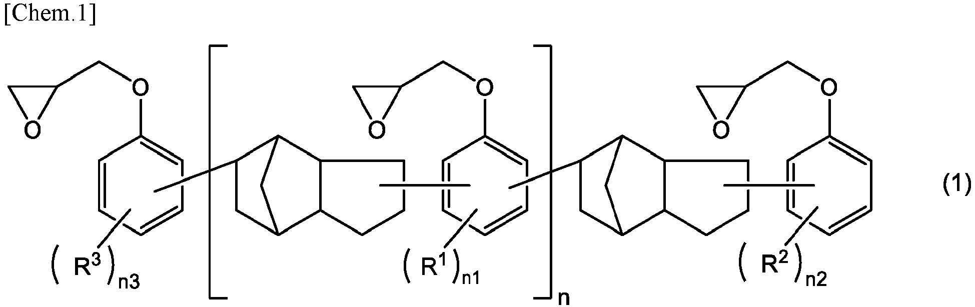 (In the general formula (1),
R¹, R² and R³ are each independently an alkyl group having 1 to 6 carbon atoms,
n1, n2 and n3 are each independently an integer of 0 to 3, and
n is the number of repetitions.)

The dicyclopentadiene type epoxy resin represented by the general formula (1) can be produced, for example, by polymerizing dicyclopentadiene and a phenol compound and reacting the resulting polymer with a halogenated epoxy compound such as epichlorohydrin.

The epoxy equivalent of the epoxy resin having a condensed alicyclic structure is preferably in a range of 200 to 2,000 g/equivalent, and more preferably in the range of 300 to 1500 g/equivalent.

Note that the epoxy equivalent is a weight of the epoxy resin required to obtain 1 mol of epoxy group, and when a mixture of two or more epoxy resins is used as the epoxy resin, the epoxy equivalent of the mixture is within the above range.

The epoxy resin having a condensed alicyclic structure preferably does not contain a bisphenol structure.

Bisphenol type epoxy resins are suspected of being endocrine disruptors, and this suspicion can be avoided by not containing the bisphenol structure in the epoxy resin.

The epoxy resin having a condensed alicyclic structure may be a commercially available product, and examples of the available product include dicyclopentadiene type epoxy resins such as EPICLON HP-7200 series (manufactured by DIC Corporation), and TACTIX 556 and 756 (both manufactured by HUNTSMAN).

The unsaturated fatty acid is preferably an unsaturated aliphatic monocarboxylic acid, more preferably an unsaturated aliphatic monocarboxylic acid having 6 to 40 carbon atoms, and still more preferably an unsaturated aliphatic monocarboxylic acid having 10 to 22 carbon atoms.

Although the degree of unsaturation of the unsaturated fatty acid is not particularly limited, for example, it is in the range of 1 to 3.

One of unsaturated fatty acids may be used alone, or two or more thereof may be used in combination. Alternatively, a saturated fatty acid may also be used in combination with the unsaturated fatty acid.

Specific examples of the unsaturated fatty acids include sorbic acid, oleic acid, linoleic acid, linolenic acid, eleostearic acid, ricinoleic acid, tung oil fatty acid, linseed oil fatty acid, dehydrated castor oil fatty acid, castor oil fatty acid, tall oil fatty acid, cottonseed oil fatty acid, soybean oil fatty acid, olive oil fatty acid, safflower oil fatty acid, and rice bran oil fatty acid.

Note that tung oil fatty acid, linseed oil fatty acid, dehydrated castor oil fatty acid, castor oil fatty acid, tall oil fatty acid, cottonseed oil fatty acid, soybean oil fatty acid, olive oil fatty acid, safflower oil fatty acid, and rice bran oil fatty acid are mixtures of unsaturated aliphatic monocarboxylic acids having 10 to 22 carbon atoms.

The unsaturated fatty acid may be either a naturally occurring unsaturated fatty acid or a synthetic unsaturated fatty acid (including a non-naturally occurring fatty acid).

The unsaturated fatty acid is preferably a semi-drying oil or a drying oil having an iodine value in the range of 120 to 200 from the viewpoint of obtaining a water-based paint excellent in oxidative polymerization with a metal dryer.

An amount of the unsaturated fatty acid to be used is, for example, 10 to 60 parts by mass, and preferably 20 to 45 parts by mass based on 100 parts by mass of the epoxy resin.

As a reaction component of the epoxy ester resin, the polyvalent carboxylic acid may be used in addition to the epoxy resin and the unsaturated fatty acid.

The epoxy ester resin, which is a reaction product of the epoxy resin, the unsaturated fatty acid, and the polyvalent carboxylic acid, can control a molecular weight by extending a polymer chain through a reaction between a carboxyl group of the polyvalent carboxylic acid and an epoxy group of the epoxy resin.

Examples of the polyvalent carboxylic acid include (anhydrous) phthalic acid, isophthalic acid, terephthalic acid, trimellitic acid, pyromellitic acid, tetrachlorophthalic acid, 1,1-cyclohexanedicarboxylic acid, 1,3-cyclohexanedicarboxylic acid, 1, 4-cyclohexanedicarboxylic acid, tetrahydrophthalic acid, chlorendic acid, 5-norbornene-2,3-dicarboxylic acid, hydrogenated trimellitic acid, adipic acid, azelaic acid, sebacic acid, (anhydrous) maleic acid, fumaric acid, and itaconic acid.

One of polyvalent carboxylic acids may be used alone, or two or more thereof may be used in combination. Further, a derivative such as an acid anhydride of the polyvalent carboxylic acid may be used as the polyvalent carboxylic acid.

When the polyvalent carboxylic acid is used as the reaction component, an amount of the polyvalent carboxylic acid to be used is, for example, 10 parts by mass or less, and preferably 6 parts by mass or less based on 100 parts by mass of the epoxy resin. Although a lower limit of the amount of the polyvalent carboxylic acid to be used is not particularly limited, it is, for example, 1 part by mass or more based on 100 parts by mass of the epoxy resin.

In the reaction component of the epoxy ester resin, a molar ratio [(epoxy group):(carboxyl group)] of epoxy group of the epoxy resin having a condensed alicyclic structure to total carboxyl groups of the unsaturated fatty acid and the polyvalent carboxylic acid is preferably in a range of 1:1 to 1:2.

By setting the molar ratio of the epoxy group to the carboxyl group within the above range, both the pigment dispersibility and coating film drying properties of the resulting epoxy ester resin can be secured.

The epoxy ester resin having a polymerizable unsaturated group and a condensed alicyclic structure contains the epoxy resin having a condensed alicyclic structure, the unsaturated fatty acid, and any polyvalent carboxylic acid as reaction components, and components other than these may be used as the reaction components.

An acid value of the epoxy ester resin having a polymerizable unsaturated group and a condensed alicyclic structure is, for example, in the range of 2 to 15 mgKOH/g, and preferably in the range of 4 to 10 mgKOH/g.

The acid value of the epoxy ester resin having a polymerizable unsaturated group and a condensed alicyclic structure is evaluated by a method described in Examples.

Although the molecular weight of the epoxy ester resin having a polymerizable unsaturated group and a condensed alicyclic structure is not particularly limited, a weight average molecular weight is, for example, in the range of 3,000 to 20,000.

The weight average molecular weight of the epoxy ester resin having a polymerizable unsaturated group and a condensed alicyclic structure is evaluated by a method described in Examples.

A reaction of the epoxy resin having a condensed alicyclic structure, the unsaturated fatty acid, and any polyvalent carboxylic acid can be carried out by a known method, and the epoxy ester resin of the present invention can be prepared, for example, by heating a reaction system containing the epoxy resin, the unsaturated fatty acid, and any polyvalent carboxylic acid.

### [Vinyl-modified epoxy ester resin]

The vinyl-modified epoxy ester resin of the present invention is a resin containing the epoxy ester resin having a polymerizable unsaturated group and a condensed alicyclic structure and the polymerizable monomer as the reaction components. Here, "containing as reaction components" means components constituting the vinyl-modified epoxy ester resin, and means not containing a solvent and a catalyst that do not constitute the vinyl-modified epoxy ester resin.

The polymerizable monomer means a compound having a polymerizable unsaturated group, and examples of the polymerizable unsaturated group of the monomer include a (meth)acryloyl group, a (meth)acryloyloxy group, a (meth)acryloylamide group, vinyl ether group, allyl group, styryl group, and maleimide group. Among them, the (meth)acryloyl group, the (meth)acryloyloxy group, or the styryl group is preferable because of easy availability of raw materials and favorable polymerization reactivity.

One of polymerizable monomers may be used alone, or two or more thereof may be used in combination.

The polymerizable monomer preferably contains a polymerizable monomer having an acidic functional group.

By using the polymerizable monomer having an acidic functional group as the polymerizable monomer, an amine compound described below can react with the acidic functional group, by which a neutralized salt structure is formed, to impart water solubility to the vinyl-modified epoxy ester resin.

Examples of the polymerizable monomer having an acidic functional group include: polymerizable monomers having a carboxyl group such as (meth)acrylic acid, crotonic acid, fumaric acid, maleic acid, citraconic acid, itaconic acid, and acryloyloxycaprolactone acid; polymerizable monomers having a phosphate group such as 2-(meth)acryloyloxyethyl acid phosphate, 3-(meth)acryloyloxypropyl acid phosphate, (meth)acryloyloxypolyoxyethylene glycol acid phosphate, and (meth)acryloyloxypolyoxypropyleneglycol acid phosphate; and monomers having a sulfonic acid group such as vinylsulfonic acid.

The polymerizable monomer having an acidic functional group also includes the derivative such as an acid anhydride.

When the polymerizable monomer having an acidic functional group is contained as the polymerizable monomer, the content ratio of the polymerizable monomer having an acidic functional group is, for example, in the range of 1 to 50 mass%, and preferably 3 to 40 mass% based on the total amount of the polymerizable monomers.

A polymerizable monomer having a group containing a polyoxyalkylene chain may be used as the polymerizable monomer. Since the polyoxyalkylene chain exhibits hydrophilicity, the hydrophilicity of the vinyl-modified epoxy ester resin can be adjusted by using the polymerizable monomer having a group containing a polyoxyalkylene chain.

Examples of the polymerizable monomer having a group containing a polyoxyalkylene chain and having a polymerizable unsaturated group that is a (meth)acryloyl group include polypropylene glycol mono(meth)acrylate, polyethylene glycol mono(meth)acrylate, polytrimethylene glycol mono(meth)acrylate, polytetramethylene glycol mono(meth)acrylate, poly(ethylene glycol/propylene glycol) mono(meth)acrylate, polyethylene glycol/polypropylene glycol mono(meth)acrylate, poly(ethylene glycol/tetramethylene glycol) mono(meth)acrylate, polyethylene glycol/polytetramethylene glycol mono(meth)acrylate, polypropylene glycol/tetramethylene glycol) mono(meth)acrylate, polypropylene glycol/polytetramethylene glycol mono(meth)acrylate, polypropylene glycol/1,2-butylene glycol) mono(meth)acrylate, polypropylene glycol/poly 1,2-butylene glycol mono(meth)acrylate, poly(ethylene glycol/1,2-butylene glycol) mono(meth)acrylate, polyethylene glycol/poly 1,2-butylene glycol mono(meth)acrylate, poly(tetraethylene glycol/1,2-butylene glycol) mono(meth)acrylate, polytetraethylene glycol/poly 1,2-butylene glycol mono(meth)acrylate, poly 1,2-butylene glycol mono(meth)acrylate, poly (ethylene glycol/trimethylene glycol) mono(meth)acrylate, polyethylene glycol/polytrimethylene glycol mono(meth)acrylate, poly (propylene glycol/trimethylene glycol) mono(meth)acrylate, polypropylene glycol/polytrimethylene glycol mono(meth)acrylate, poly(trimethylene glycol/tetramethylene glycol) mono(meth)acrylate, polytrimethylene glycol/polytetramethylene glycol mono(meth)acrylate, poly(1,2-butylene glycol/trimethylene glycol) mono(meth)acrylate, poly 1,2-butylene glycol/polytrimethylene glycol mono(meth)acrylate, 2-hydroxyethyl (meth)acrylate, 2-hydroxypropyl (meth)acrylate, 2-hydroxybutyl (meth)acrylate, 4-hydroxybutyl (meth)acrylate, poly(1,2-butylene glycol/tetramethylene glycol) mono(meth)acrylate, and poly 1,2-butylene glycol/polytetramethylene glycol mono(meth)acrylate.

Note that the "poly(ethylene glycol/propylene glycol)" means a random copolymer of ethylene glycol and propylene glycol, and the "polyethylene glycol/polypropylene glycol" means a block copolymer of ethylene glycol and propylene glycol.

When the polymerizable monomer having a group containing a polyoxyalkylene chain and having a polymerizable unsaturated group that is a (meth)acryloyl group is contained as the polymerizable monomer, the content ratio of the polymerizable monomer having a group containing a polyoxyalkylene chain and having a polymerizable unsaturated group that is a (meth)acryloyl group is, for example, in the range of 5 to 40 mass%, and preferably 10 to 35 mass% based on the total amount of the polymerizable monomers.

As the polymerizable monomer, other polymerizable monomers other than the polymerizable monomer having an acidic functional group and the polymerizable monomer having a group containing a polyoxyalkylene chain may be used if necessary.

Examples of the other polymerizable monomers include a polymerizable monomer having one or more selected from an alkyl group having 1 to 18 carbon atoms and an aromatic group having 6 to 18 carbon atoms, and having a polymerizable unsaturated group that is a (meth)acryloyl group. By using the polymerizable monomer, hardness of the resulting coating film can be adjusted.

Note that the alkyl group may be linear, branched, or alicyclic, and the aromatic group includes a fused ring.

Specific examples of the other polymerizable monomers include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-hexyl (meth)acrylate, n-octyl (meth)acrylate, 2-ethylhexyl (meth)acrylate, nonyl (meth)acrylate, decyl (meth)acrylate, dodecyl (meth)acrylate, tridecyl (meth)acrylate, cetyl (meth)acrylate, stearyl (meth)acrylate, behenyl (meth)acrylate, cyclohexyl (meth)acrylate, 4-tert-butylcyclohexyl (meth)acrylate, isobornyl (meth)acrylate, dicyclopentanyl (meth)acrylate, adamantyl (meth)acrylate, benzyl (meth)acrylate, styrene, α-methylstyrene, p-methylstyrene, and p-methoxystyrene.

The other polymerizable monomers may further have a hydroxyl group.

By using a polymerizable monomer having a hydroxyl group, it is possible to adjust reactivity with a melamine-based curing agent and an isocyanate-based curing agent that react with the hydroxyl group. By increasing the number of hydroxyl groups, it is possible to obtain a resin composition having excellent curing speed and coating film durability, and by decreasing the number of hydroxyl groups, it is possible to obtain a resin composition having a long usable time (so-called pot life) after mixing with the curing agent.

Specific examples of the polymerizable monomer having a hydroxyl group include 2-hydroxyethyl (meth)acrylate, 2-hydroxypropyl (meth)acrylate, 3-hydroxypropyl (meth)acrylate, 4-hydroxybutyl (meth)acrylate, 2-hydroxybutyl (meth)acrylate, 3-hydroxybutyl (meth)acrylate, 1,4-cyclohexanedimethanol mono(meth)acrylate, glycerin mono(meth)acrylate, polyethylene glycol mono(meth)acrylate, polypropylene glycol mono(meth)acrylate, 2-hydroxy-3-phenoxypropyl (meth)acrylate, 2-(meth)acryloyloxyethyl-2-hydroxyethyl phthalate, lactone-modified (meth)acrylate having a terminal hydroxyl group, and 2-methacryloyloxy ethyl acid phosphate.

When the polymerizable monomer having one or more selected from an alkyl group having 1 to 18 carbon atoms and an aromatic group having 6 to 18 carbon atoms, and having a polymerizable unsaturated group that is a (meth)acryloyl group is contained as the polymerizable monomer, the content ratio of the polymerizable monomer having one or more selected from an alkyl group having 1 to 18 carbon atoms and an aromatic group having 6 to 18 carbon atoms, and having a polymerizable unsaturated group that is a (meth)acryloyl group is, for example, in the range of 50 to 99 mass%, and preferably 60 to 97 mass% based on the total amount of the polymerizable monomers.

The polymerization form of the vinyl-modified epoxy ester resin of the present invention is not particularly limited, and may be any one of a random copolymer, a block copolymer, and graft copolymer of the epoxy ester resin having a polymerizable unsaturated group and a condensed alicyclic structure and the polymerizable monomer.

In the reaction components of the vinyl-modified epoxy ester resin of the present invention, the mass ratio of the epoxy ester resin having a polymerizable unsaturated group and a condensed alicyclic structure to the polymerizable monomer is, for example, in the range of (epoxy ester resin):(polymerizable monomer) = 20:80 to 80:20, and preferably 30:70 to 80:20.

When the mass ratio of the epoxy ester resin to the polymerizable monomer is within the above range, a performance balance can be achieved between the epoxy ester resin responsible for the pigment dispersibility and the polymerizable monomer responsible for stability against the solvent (for example, water or polar solvent).

The acid value of the vinyl-modified epoxy ester resin is, for example, in the range of 15 to 80 mgKOH/g, preferably in the range of 20 to 70 mgKOH/g, and more preferably in the range of 20 to 60 mgKOH/g. When the acid value of the vinyl-modified epoxy ester resin is within this range, storage stability and high water resistance of the coating film can be obtained.

Note that the acid value of the vinyl-modified epoxy ester resin is evaluated by a method described in Examples.

The weight average molecular weight of the vinyl-modified epoxy ester resin is not particularly limited, and is, for example, in the range of 10,000 to 100,000, and preferably in the range of 9,000 to 40,000.

The weight average molecular weight of the vinyl-modified epoxy ester resin is evaluated by a method described in Examples.

The vinyl-modified epoxy ester resin of the present invention is preferably a resin containing the epoxy ester resin having a polymerizable unsaturated group and a condensed alicyclic structure, a polymerizable monomer containing the polymerizable monomer having an acidic functional group, and an aliphatic amine as the reaction components.

With regard to the vinyl-modified epoxy ester resin of the present invention, a neutralized salt structure is formed by reacting the aliphatic amine with an acidic functional group derived from the polymerizable monomer having an acidic functional group. Since the neutralized salt structure exhibits hydrophilicity, it is possible to impart water solubility or water dispersibility to the vinyl-modified epoxy ester resin.

Examples of the aliphatic amine include methylamine, dimethylamine, trimethylamine, ethylamine, diethylamine, triethylamine, butylamine, dibutylamine, tributylamine, N,N-dimethylethanolamine, N,N-diethylethanolamine, 2-aminoethanol, 2-amino-2-methyl-1-propanol, 2-(N,N-dimethylamino)-2-methyl-1-propanol, diethanolamine, diisopropanolamine, dibutanolamine, triethanolamine, diazabicyclononene, and diazabicycloundecene.

One of aliphatic amines may be used alone, or two or more thereof may be used in combination.

An amount of the aliphatic amine to be used is such that a neutralization ratio of the acidic functional group of the vinyl-modified epoxy ester resin of the present invention is in the range of 50% to 100%, and preferably in the range of 60% to 100%.

The vinyl-modified epoxy ester resin of the present invention contains the epoxy ester resin having a polymerizable unsaturated group and a condensed alicyclic structure, the polymerizable monomer, and any aliphatic amine as the reaction components, and is preferably a vinyl-modified epoxy ester resin containing an epoxy ester resin having a fused ring, the polymerizable monomer, and any aliphatic amine as the reaction components.

When producing the vinyl-modified epoxy ester resin of the present invention, the reaction of the epoxy ester resin having a polymerizable unsaturated group and a condensed alicyclic structure and the polymerizable monomer can be carried out by a known method, and can be carried out, for example, by adding a radical polymerization initiator to a reaction system containing the epoxy ester resin having a polymerizable unsaturated group and a condensed alicyclic structure and the polymerizable monomer.

Examples of the radical polymerization initiator include: azo compounds such as 2,2'-azobis(isobutyronitrile), 2,2'-azobis(2-methylbutyronitrile), and azobiscyanovaleric acid; organic peroxides such as tert-butyl peroxypivalate, tert-butyl peroxybenzoate, tert-butyl peroxy-2-ethylhexanoate, tert-butyl peroxy-2-ethylhexyl monocarbonate, n-butyl 4,4-di(tert-butyl peroxy) valerate, di-tert-butyl peroxide, di-tert-butyl hydroperoxide, cumene hydroperoxide, benzoyl peroxide, tert-butyl hydroperoxide; and inorganic peroxides such as hydrogen peroxide, ammonium persulfate, potassium persulfate, and sodium persulfate.

One of radical polymerization initiators may be used alone, or two or more thereof may be used in combination.

An amount of the radical polymerization initiator to be used is not particularly limited, but is preferably used, for example, in the range of 0.5 to 10 parts by mass based on 100 parts by mass of the polymerizable monomer. Within this range, residual unreacted monomers can be suppressed, and abnormal heat generation and runaway reaction can be suppressed.

### [Resin composition]

The resin composition of the present invention contains the epoxy ester resin of the present invention and/or the vinyl-modified epoxy ester resin of the present invention. Among others, the vinyl-modified epoxy ester resin of the present invention can be dissolved or dispersed not only in an organic solvent but also in an aqueous solvent.

Examples of the organic solvent include: alcohol solvents such as methanol, ethanol, propanol, n-butanol, iso-butanol, tert-butanol and 3-methoxybutanol; glycol solvents such as ethylene glycol and propylene glycol; glycol ether solvents such as ethylene glycol monomethyl ether, ethylene glycol monoethyl ether, ethylene glycol monobutyl ether, ethylene glycol dimethyl ether, diethylene glycol dimethyl ether, diethylene glycol diethyl ether, diethylene glycol dibutyl ether, propylene glycol monomethyl ether, propylene glycol monopropyl ether, propylene glycol monobutyl ether, propylene glycol dimethyl ether, dipropylene glycol monomethyl ether, and dipropylene glycol dimethyl ether; glycol ester solvents such as ethylene glycol monoethyl ether acetate, propylene glycol monomethyl ether acetate, diethylene glycol monoethyl ether acetate, and diethylene glycol monobutyl ether acetate; ketone solvents such as acetone, methyl ethyl ketone, and methyl isobutyl ketone; dimethylformamide; dimethylacetamide; N-methylpyrrolidone; dimethylsulfoxide; and tetrahydrofuran.

One of organic solvents may be used alone, or two or more thereof may be used in combination.

Examples of the aqueous solvent include water, a water-miscible organic solvent, and a mixture thereof.

The water is not particularly limited, and any one of general clean water, industrial water, distilled water, and the like can be used.

Examples of the water-miscible organic solvent include the above alcohol solvents, glycol solvents, glycol ether solvents, glycol ester solvents, and ketone solvents.

The solvent for the resin composition of the present invention is preferably water alone or a mixed solvent of water and the water-miscible organic solvent.

In the resin composition of the present invention, the solvent is used such that the solid content concentration is, for example, 10 to 70 mass%, and preferably 30 to 60 mass%.

The resin composition of the present invention can ensure sufficient pigment dispersibility even when it contains an extender pigment and a rust preventive pigment, which are generally considered to have poor dispersibility.

Here, the extender pigment is a pigment that is blended for the purpose of modification (increase in weight, colorability, drying properties, and the like) of the resin composition, and the rust preventive pigment is a pigment that is blended to improve corrosion resistance of the resin composition, and for example, a metal silicate, a metal carbonate, a metal sulfate, a metal phosphate, and a metal phosphite are used.

Specific examples of the extender pigment include barium sulfate, barium carbonate, calcium carbonate, magnesium oxide, magnesium carbonate, magnesium hydroxide, barium titanate, calcium hydroxide, calcium sulfite, calcium sulfate, calcium oxide, calcium silicate, and titanium oxide, silica, zeolite, and talc.

One of extender pigments contained in the resin composition may be used alone, or two or more thereof may be used in combination.

Specific examples of the rust preventive pigment include phosphate, hydrogen phosphate, phosphosilicate, borosilicate, borate, metaborate, molybdate, chromate, and polyphosphate of one or more metals selected from the group consisting of calcium, strontium, barium, zinc, aluminum, and magnesium.

One of rust preventive pigments contained in the resin composition may be used alone, or two or more thereof may be used in combination.

When the resin composition of the present invention contains the extender pigment and/or the rust preventive pigment, the total content of the extender pigment and the rust preventive pigment is, for example, in the range of 20 to 80 parts by mass based on 100 parts by mass of the epoxy ester resin of the present invention and/or the vinyl-modified epoxy ester resin of the present invention.

### (Other components)

The resin composition of the present invention may be in the form of a one-component paint that does not use the curing agent, or may be in the form of a multicomponent paint that uses the curing agent.

Examples of the curing agent include a polyisocyanate compound, a melamine compound, an epoxy compound, an oxazoline compound, and a carbodiimide compound.

The resin composition of the present invention may further contain, if necessary, various additives such as a coloring pigment, a metal drier (which is responsible for promoting oxidation polymerization of carbon-carbon double bonds in the resin), a wax, a surfactant, a stabilizer, a flow control agent, a dye, a leveling agent, a rheology control agent, a UV absorbing agent, an antioxidant, a plasticizer, an antistatic agent, an antifoaming agent, a viscosity modifier, a light-resistant stabilizer, a weather-resistant stabilizer, a heat-resistant stabilizer, a pigment dispersant, a heat-curable resin, and a thermoplastic resin. Known ones can be used for the additives.

### [Paint]

The resin composition of the present invention can be suitably used as a resin composition for coating, and by using the resin composition of the present invention as a paint, a cured coating film having excellent water resistance and corrosion resistance can be formed on a surface of various articles.

The paint of the present invention may be coated directly on an article that is an object to be coated, or may be coated with a primer coating material suitable for the object to be coated, and then coated with the water-based paint of the present invention.

Examples of materials of the article that is the object to be coated include: various metals such as iron, copper, zinc, aluminum, and magnesium, and alloys thereof; plastic substrates such as polycarbonate (PC), acrylonitrile-butadiene-styrene copolymer (ABS), PC-ABS polymer alloys, polymethyl methacrylate (PMMA), polyethylene terephthalate (PET), polyamide (PA), polypropylene (PP), and fiber-reinforced plastic (FRP) containing a filler such as glass fiber or carbon fiber; and glass.

A method for coating the paint of the present invention varies depending on an article to be coated, and examples of the method include gravure coater, roll coater, comma coater, knife coater, air knife coater, curtain coater, kiss coater, shower coater, wheeler coater, spin coater, dipping, screen printing, spray, applicator, bar coater, brush, and roller.

Examples of articles having a coating film of the paint of the present invention include: housings and internal parts of home appliances such as televisions, refrigerators, washing machines, and air conditioners; housings and internal parts of electronic devices such as smartphones, mobile phones, tablet terminals, personal computers, digital cameras, and game machines; housings of office automation equipment such as printers and facsimiles; leisure sports goods; interior and exterior materials for various vehicles such as automobiles, ships, and railway vehicles; industrial machinery; building interior and exterior materials such as exterior walls, roofs, glass, and veneers; and civil engineering members such as soundproof walls and drains.

### [Examples]

The present invention will be specifically described below with reference to Examples and Comparative Examples.

However, the present invention is not limited to the following examples.

In the examples of the present application, values of the acid value and hydroxyl value are values evaluated by the following methods.

### [Method for measuring acid value]

Measured by a method according to JIS K0070-1992.

### [Method for measuring hydroxyl value]

Measured by a method according to JIS K0070-1992.

In the examples of the present application, the number average molecular weight of polyester is a value converted to polystyrene based on GPC measurement, and the measurement conditions are as follows.

### [GPC measurement conditions]

Measuring device: High-speed GPC apparaus "HLC-8320GPC" manufactured by Tosoh Corporation
Column: "TSK GURADCOLUMN SuperHZ-L" manufactured by Tosoh Corporation + "TSK gel SuperHZM-M" manufactured by Tosoh Corporation + "TSK gel SuperHZM-M" manufactured by Tosoh Corporation + "TSK gel SuperHZ-2000" manufactured by Tosoh Corporation + "TSK gel SuperHZ-2000" manufactured by Tosoh Corporation
Detector: RI (differential refractometer)
Data processing: "EcoSEC Data Analysis Version 1.07" manufactured by Tosoh Corporation
Column temperature: 40°C
Developing solvent: Tetrahydrofuran
Flow rate: 0.35 mL/min
Measurement sample: A measurement sample was obtained by dissolving 7.5 mg of a sample in 10 ml of tetrahydrofuran and filtering the resulting solution through a microfilter.
Sample injection volume: 20 µl
Standard sample: The following monodisperse polystyrene having a known molecular weight was used according to a measurement manual of the "HLC-8320GPC".

### (Monodisperse polystyrene)

"A-300" manufactured by Tosoh Corporation
"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation
"F-288" manufactured by Tosoh Corporation

### (Synthesis Example 1: Preparation of aqueous dispersion resin composition)

10.33 parts by mass of dicyclopentadiene type epoxy resin (EPICLON HP-7200HH manufactured by DIC Corporation), 7.66 parts by mass of soybean oil fatty acid (manufactured by Tsuno Food Industrial Co., Ltd.), 1.91 parts by mass of dehydrated castor oil fatty acid (manufactured by Ito Oil Chemicals Co., Ltd.), and 0.10 parts by mass of maleic anhydride were charged into a four-necked flask equipped with a stirrer, a thermometer, a temperature control device, and a nitrogen inlet tube, heated to 230°C with stirring, and reacted for 8 hours while maintaining the temperature. When the acid value of the resin was 1.0 (mgKOH/g) or less, the reaction was terminated to obtain a dicyclopentadiene type epoxy ester resin having a polymerizable unsaturated group and a dicyclopentadiene structure.

25.25 parts by mass of propylene glycol-n-propyl ether was added to 20.00 parts by mass of the resulting dicyclopentadiene type epoxy ester resin for dilution, and the liquid temperature was adjusted to 140°C. A mixed solution of 3.00 parts by mass of acrylic acid, 25.00 parts by mass of styrene, 15.00 parts by mass of methyl methacrylate, 27.00 parts by mass of 2-ethylhexyl acrylate, 10.00 parts by mass of cyclohexyl methacrylate, and 1.60 parts by mass of tert-butylperoxy-2-ethylhexyl monocarbonate (Perbutyl E manufactured by NOF Corporation) as a polymerization initiator, that was prepared in advance in a separate container, was added dropwise over 3 hours into the four-necked flask, and further reacted at the temperature for 2 hours to obtain a solution of a vinyl-modified epoxy ester resin (acid value: 23.5 mgKOH/g).

The resulting vinyl-modified epoxy ester resin solution was cooled to 60°C, and added with 3.78 parts by mass of N,N-dimethylaminoethanol to neutralize the vinyl-modified epoxy ester resin. After neutralization, 123.30 parts by mass of ion-exchanged water was added to the resulting solution for phase inversion emulsification, and was filtered through 200 mesh filter to obtain an aqueous dispersion resin composition (1) for water-based paint, in which the vinyl-modified epoxy ester resin was dispersed in the form of particles in water.

The non-volatile content of the resin composition (1) was 40 wt%, and the weight average molecular weight of the neutralized vinyl-modified epoxy ester resin was 23,000.

### (Synthesis Examples 2 to 9 and Synthesis Comparative Examples 1 to 3: Preparation of aqueous dispersion resin composition)

Epoxy ester resins having the composition shown in Table 1 were prepared in the same manner as in Synthesis Example 1. Using the resulting epoxy ester resins, vinyl-modified epoxy ester resins were prepared in the same manner as in Synthesis Example 1 using polymerizable monomers, radical polymerization initiators, and amine compounds shown in Table 1, and resin compositions (2) to (9) and (1') to (3') having a non-volatile content of 40 wt% were produced using solvents shown in Table 1.

**[Table 1]**

| | | | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 | Synthesis Comparative Example 1 | Synthesis Comparative Example 2 | Synthesis Comparative Example 3 |
|---|---|---|---|---|---|---|---|---|---|---|---|---|---|---|
| Epoxy ester resin | Dicyclopentadiene type epoxy resin | EPICLON HP-7200HHH | 10.33 | 25.82 | 41.32 | | | | | | | 7.75 | 43.90 | |
| | | EPICLON HP-7200 | | | | 15.75 | 25.59 | 29.53 | | | | | | |
| | | EPICLON HP-7200L | | | | | | | 9.76 | 19.51 | 22.76 | | | |
| | Bisphenol A type epoxy resin | EPICLON-1050 | | | | | | | | | | | | 28.20 |
| | Unsaturated fatty acid | Soybean oil fatty acid | 7.66 | 19.14 | 30.62 | | | | 19.78 | 39.56 | 46.15 | 5.74 | 32.53 | 15.64 |
| | | Linseed oil fatty acid | | | | 23.41 | 38.04 | 43.90 | | | | | | |
| | | Dehydrated castor oil fatty acid | 1.91 | 4.78 | 7.66 | | | | | | | 1.44 | 8.13 | 15.64 |
| | Polyvalent carboxylic acid | Maleic anhydride | 0.10 | 0.25 | 0.41 | 0.34 | 0.54 | 0.63 | | | | 0.08 | 0.43 | |
| | | Phthalic anhydride | | | | 0.51 | 0.82 | 0.95 | | | | | | 0.52 |
| | | Fumaric acid | | | | | | | 0.47 | 0.93 | 1.09 | | | |
| | Total epoxy ester resins | | 20.00 | 50.00 | 8000 | 4000 | 65.00 | 75.00 | 3000 | 6000 | 70.00 | 15.00 | 85.00 | 6000 |
| Polymerizable monomer | Acrylic acid | | 3.00 | | 5.00 | 2.70 | | 3.00 | | | | 3.00 | 3.00 | 5.00 |
| | Methacrylic acid | | | 5.00 | | | 4.00 | | | 700 | | | | |
| | Aronix M-5300 | | | | | | 500 | | 8.00 | | 12.00 | | | |
| | Ligaht Ester P-1M | | | | | | | 200 | 4.00 | 500 | | | | |
| | Styrene | | 25.00 | | | 2300 | | 15.00 | | 4.00 | | 25.00 | | 15.00 |
| | Methyl methacrylate | | 15.00 | | | 700 | 5.00 | | 25.00 | | | 20.00 | | |
| | Ethyl acrylate | | 27.00 | 15.00 | 10.00 | 17.30 | 10.00 | | 25.00 | 10.00 | | 27.00 | 500 | 15.00 |
| | Cvclohexvl methacrylate | | 10.00 | 15.00 | 5.00 | 10.00 | 11.00 | | | 14.00 | 10.00 | 10.00 | 500 | |
| | Methoxy polyethylene glycol monomethacrylate | | | 15.00 | | | | 5.00 | 8.00 | | 8.00 | | 3.00 | 5.00 |
| | Total polymerizable monomers | | 8000 | 50.00 | 20.00 | 6000 | 3500 | 25.00 | 70.00 | 4000 | 3000 | 8500 | 16.00 | 4000 |
| Radical polymerization initiator | | Perbutyl Z | | 2.50 | | | 1.40 | | 2.10 | | | | | 1.60 |
| | | Perbutyl E | 1.60 | | | 1.20 | | 0.50 | | 200 | 0.90 | 1.70 | 0.32 | |
| | | ABN-E | | | 0.60 | | | 0.50 | | | | | | |
| Amine compound | Triethyl amine | | | 5.55 | | 1.84 | | 1.85 | 3.68 | | | | | |
| | N,N-dimethylaminoethanol | | 3.78 | | 5.41 | | 3.80 | 1.63 | | 4.83 | 3.48 | 3.59 | 3.59 | 4.67 |
| | 2-amino-2-(N,N-dimethylamino)-1-propanol | | | | | 2.13 | | | | | | | | |
| Organic solvent | Ethylene olycol-n-butyl ether | | | | 20.00 | 3800 | | | | | 20.00 | | | |
| | Propylene alycol-n-propyl ether | | 25.25 | | | | 15.00 | 12.00 | 19.77 | | | 12.00 | 12.00 | 12.00 |
| | Dipropylene glycol dimethyl ether | | | | 5.17 | | 10.17 | | 5.19 | 6.74 | | | | |
| Water | | | 123.30 | 148.16 | 120.03 | 110.97 | 122.80 | 135.18 | 122.06 | 141.29 | 127.53 | 135.18 | 135.18 | 135.18 |
| Vinyl-modified epoxy ester resin | | Acid value [mgKOH/g] | 23.5 | 33.4 | 39.9 | 21.2 | 36.4 | 29.1 | 25.0 | 59.7 | 22.9 | 23.4 | 23.5 | 44.6 |
| | | Weight average molecular weight | 25,000 | 17,000 | 13,000 | 35,000 | 24,000 | 19,000 | 40,000 | 31,000 | 23,000 | 32,000 | 11,000 | 36,000 |

Units of the components of the epoxy ester resin, the polymerizable monomers, the radical polymerization initiators, the amine compounds, the organic solvents, and water in Table 1 are all in parts by mass.

In Table 1, epoxy resins are as follows.
EPICLON HP-7200HHH: Dicyclopentadiene type epoxy resin
EPICLON HP-7200: Dicyclopentadiene type epoxy resin
EPICLON HP-7200L: Dicyclopentadiene type epoxy resin
EPICLON 1050: Bisphenol A type epoxy resin

EPICLON HP-7200HHH, EPICLON HP-7200, and EPICLON HP-7200L are all dicyclopentadiene type epoxy resins represented by the general formula (1), and differ only in molecular weight. Specifically, the molecular weight increases in the order of HP-7200L < HP-7200 < HP-7200HHH.

In Table 1, the polymerizable monomers are as follows.
Aronix M-5300: ω-carboxy-polycaprolactone monoacrylate (manufactured by Toagosei Co., Ltd.)
Light Ester P-1M: 2-methacroyloxyethyl acid phosphate (manufactured by Kyoeisha Chemical Co., Ltd.)
Aronix M-5300 and Light Ester P-1M correspond to polymerizable monomers having an acidic functional group.

### (Examples 1-9 and Comparative Examples 1-3: Preparation of aqueous coating composition, and formation and evaluation of coating film)

Using the prepared resin compositions (1) to (9) and (1') to (3'), coating compositions were prepared by the following method, coating films were formed, and their physical properties were evaluated.

53.4 parts by mass of each of the resulting resin compositions (1) to (9) and (1') to (3'), 25.0 parts by mass of titanium oxide ("Ti-Pure R-960" manufactured by Chemours), 25.0 parts by mass of calcium carbonate ("Super S" manufactured by Maruo Calcium Co., Ltd.), 0.1 parts by mass of antifoaming agent ("BYK-028" manufactured by BYK), and 15.4 parts by mass of water were mixed and kneaded with a paint shaker for 60 minutes to obtain a kneaded base (non-volatile content: 60 mass%). 71.4 parts by mass of each of the resin compositions (1) to (9) and (1') to (3'), 0.8 parts by mass of a metal dryer ("DICNATE 3111TL" manufactured by DIC Corporation), 0.5 parts by mass of a leveling agent ("BYK-348" manufactured by BYK), and 8.4 parts by mass of water were further added to the resulting kneaded base, and mixed to obtain each of aqueous coating compositions (1-1) to (1-9) and (1-1') to (1-3') having a nonvolatile content of 50 mass%.

The resulting aqueous coating compositions (1-1) to (1-9) and (1-1') to (1-3') were coated on a zinc phosphate-treated steel plate using an applicator so as to have a film thickness of 20 µm. After coating, the steel plate was allowed to stand at room temperature of 25°C for 7 days to form a crosslinked coating film in which carbon-carbon unsaturated bonds in the vinyl-modified epoxy ester resin were oxidatively polymerized with the metal dryer.

The produced aqueous coating compositions (1-1) to (1-9) and (1-1') to (1-3'), and coating films obtained using the aqueous coating compositions (1-1) to (1-9) and (1-1') to (1-3') were evaluated as follows. Table 2 shows the results.

### (Evaluation of pigment dispersibility)

The coating composition was poured into a dedicated glass cell of a liquid dispersion stability evaluation device ("Turbiscan MA2000" manufactured by EKO Instruments Co., Ltd.) and allowed to stand for 1 hour, and then an integrated value of change in backscattered light of the coating composition was measured and used as a reference value. After the coating composition in the glass cell was allowed to stand at 25°C for 7 days, the same measurement was performed again. The pigment dispersibility of the coating composition was evaluated by a relative rate of change of the integrated value after 7 days based on the reference value. If the rate of change was less than 15%, it was considered that performance was acceptable for practical use. Note that since the coating composition (1-2') of Comparative Example 2 was extremely poor in pigment dispersibility, evaluations after gloss value to be described below were not performed.
S: less than 7%
A: 7% or more and less than 15%
B: 15% or more

### (Gloss value)

For the coating film formed on the steel plate, the gloss at an incident angle of 60° and a reflection angle of 60° was measured at arbitrary five points using a gloss meter Micro-Tri-Gloss (manufactured by BYK), and the measured value was used as the gloss value.

### (Tack-free arrival time)

The coating composition was coated on a glass plate (about 2 cm wide and about 35 cm long) using the applicator (gap: 150 µm), and the glass plate coated with the coating composition was set in a DTT-II type paint drying time measuring instrument (manufactured by Taiyu Kizai Co., Ltd.) to measure the time until tack-free.

Note that the tack-free arrival time is a value based on ASTM D5895-03 (the tack-free arrival time is a time until a scratch on the coating film starts to change from a continuous line to a broken line).

### (Substrate adhesion)

For the coating film formed on the steel plate, the substrate adhesion was evaluated based on JIS K-5400:1990. Specifically, 1 mm-wide cuts were made on the coating film with a cutter so that the number of squares was 100, and a cellophane tape was attached to cover all the squares, to be quickly peeled off. The number of squares remaining in close contact after the test was expressed as a percentage.

In terms of the substrate adhesion, 100% means that there was no peeling of the coating film, and 0% means that the coating film was completely peeled off. If adhesion of 95% or more is observed, it can be considered that the performance is acceptable for practical use.

### (Water resistance)

The water resistance of the coating film formed on the steel plate was evaluated based on ASTM D870-02. Specifically, the 60° gloss value of the surface of the coating film was measured in advance with the gloss meter Micro-Tri-Gloss (manufactured by BYK), and then the test sample was immersed in a warm water bath at 40°C and left to stand for 24 hours. After taking out the test sample, the substrate adhesion was evaluated by the method described above (substrate adhesion after immersion in warm water). Next, the 60° gloss value of the surface of the coating film was measured, and the gloss value after immersion was divided by the gloss value before immersion to obtain a "gloss retention rate".

Note that if the substrate adhesion after immersion in the warm water bath is 90% or more and the gloss retention rate is 90% or more, it can be considered that the performance is acceptable for practical use.

### (Corrosion resistance)

In the coating film formed on the steel plate, an X-shaped cut was made with a cutting edge of a cutter knife so as to reach the substrate from above the coating film. This substrate was set in a salt spray tester CYP-90 (manufactured by Suga Test Instruments Co., Ltd.) conforming to JIS Z2371, and a 5% sodium chloride aqueous solution was continuously sprayed at 35°C for 15 days. After spraying, the substrate was washed with water and dried at 25°C for 2 hours, then a cellophane tape was attached to the coating film, and the degree of peeling of the coating film when the cellophane tape was peeled off was evaluated according to the following criteria.
S: peel width in peel test is less than 1 mm
A: peel width in peel test is 1 mm or more and less than 3 mm
B: peel width in peel test is 3 mm or more

Here, the "peeling width" refers to a width of the peeled coating film centered on the cut made with the cutter knife. If the peeling width is less than 3 mm, it can be considered that the performance is acceptable for practical use.

**[Table 2]**

| | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|
| Coating composition | (1-1) | (1-2) | (1-3) | (1-4) | (1-5) | (1-6) | (1-7) | (1-8) | (1-9) | (1-1') | (1-2') | (1-3') |
| Pigment dispersion stability | S | S | S | S | S | S | S | S | S | A | B | A |
| Gloss value [-] | 89 | 95 | 102 | 92 | 94 | 98 | 96 | 97 | 97 | 48 | - | 40 |
| Tack-free arrival time [min] | 55 | 40 | 35 | 45 | 40 | 35 | 50 | 45 | 45 | 90 | | 45 |
| Substrate adhesion [%] | 100 | 100 | 100 | 100 | 100 | 100 | 100 | 100 | 100 | 100 | | 100 |
| Adhesion after immersion in warm water [%] | 100 | 100 | 100 | 100 | 100 | 100 | 100 | 100 | 100 | 100 | | 90 |
| Gloss retention rate [%] | 98 | 95 | 92 | 96 | 94 | 93 | 96 | 93 | 92 | 70 | | 70 |
| Corrosion resistance | A | A | A | A | A | A | A | A | A | B | | A |

From the results in Table 2, it can be understood that the coating film obtained from the aqueous coating composition using the vinyl-modified epoxy ester resin of the present invention as a binder resin is excellent in glossiness and corrosion resistance. On the other hand, in Comparative Example 1, it can be understood that since the amount of the polymerizable monomer used for producing the vinyl-modified epoxy ester resin is large (an amount of the epoxy ester resin is small), it is inferior in glossiness and corrosion resistance. In Comparative Example 2, it can be understood that since the amount of the polymerizable monomer used for producing the vinyl-modified epoxy ester resin is small (the amount of the epoxy ester resin is large), the pigment dispersibility was not obtained. In Comparative Example 3, it can be understood that the coating film does not have gloss because the vinyl-modified epoxy ester resin does not have a condensed alicyclic structure.

### (Examples 10 to 18 and Comparative Examples 4 to 6: Preparation of aqueous coating composition, and formation and evaluation of coating film)

Using the prepared resin compositions (1) to (9) and (1') to (3'), coating compositions were prepared by the following method, coating films were formed, and their physical properties were evaluated.

53.4 parts by mass of each of the resulting resin compositions (1) to (9) and (1') to (3'), 20.0 parts by mass of titanium oxide ("Ti-Pure R-960" manufactured by Chemours), 20.0 parts by mass of calcium carbonate ("Super S" manufactured by Maruo Calcium Co., Ltd.), 10.0 parts by mass of calcium hydrogen phosphate ("EXPERT NP-1020C" manufactured by Toho Ganryo Kogyo Co., Ltd.), 0.1 parts by mass of antifoaming agent ("BYK-028" manufactured by BYK), and 15.4 parts by mass of water were mixed and kneaded with a paint shaker for 60 minutes to obtain a kneaded base (non-volatile content: 60 mass%). 71.4 parts by mass of each of the resin compositions (1) to (9) and (1') to (3'), 0.8 parts by mass of a metal dryer ("DICNATE 3111TL" manufactured by DIC Corporation), 0.5 parts by mass of a leveling agent ("BYK-348" manufactured by BYK), and 8.4 parts by mass of water were further added to the resulting kneaded base, and mixed to obtain each of aqueous coating compositions (2-1) to (2-9) and (2-1') to (2-3') having a nonvolatile content of 50 mass%.

The produced aqueous coating compositions (2-1) to (2-9) and (2-1') to (2-3'), and coating films obtained using the aqueous coating compositions (2-1) to (2-9) and (2-1') to (2-3') were evaluated in the same manner as above. Table 3 shows the results.

Note that since the coating composition (2-2') of Comparative Example 5 was extremely poor in pigment dispersibility, the evaluations after the gloss value were not performed.

**[Table 3]**

| | Example 10 | Example 11 | Example 12 | Example 13 | Example 14 | Example 15 | Example 16 | Example 17 | Example 18 | Comparative Example 4 | Comparative Example 5 | Comparative Example 6 |
|---|---|---|---|---|---|---|---|---|---|---|---|---|
| Coating composition | (2-1) | (2-2) | (2-3) | (2-4) | (2-5) | (2-6) | (2-7) | (2-8) | (2-9) | (2-1') | (2-2') | (2-3') |
| Pigment dispersion stability | S | S | S | S | S | S | S | S | S | B | B | A |
| Gloss value [-] | 70 | 77 | 84 | 74 | 80 | 82 | 73 | 76 | 80 | 32 | - | 10 |
| Tack-free arrival time [min] | 55 | 40 | 35 | 45 | 40 | 35 | 50 | 45 | 45 | 90 | | 45 |
| Substrate adhesion [%] | 100 | 100 | 100 | 100 | 100 | 100 | 100 | 100 | 100 | 100 | | 100 |
| Adhesion after immersion in warm water [%] | 100 | 100 | 100 | 100 | 100 | 100 | 100 | 100 | 100 | 100 | | 90 |
| Gloss retention rate [%] | 93 | 92 | 90 | 94 | 91 | 92 | 95 | 94 | 94 | 65 | | 52 |
| Corrosion resistance | S | S | S | S | S | S | S | S | S | B | | A |

The results in Table 3 are also similar to those in Table 2. It can be understood that the coating film obtained from the aqueous coating composition using the vinyl-modified epoxy ester resin of the present invention as the binder resin is excellent in glossiness and corrosion resistance. On the other hand, in Comparative Example 4, it can be understood that since the amount of the polymerizable monomer used for producing the vinyl-modified epoxy ester resin is large (the amount of the epoxy ester resin is small), it is inferior in glossiness and corrosion resistance. In Comparative Example 5, it can be understood that since the amount of the polymerizable monomer used for producing the vinyl-modified epoxy ester resin is small (the amount of the epoxy ester resin is large), the pigment dispersibility was not obtained. In Comparative Example 6, it can be understood that the coating film does not have gloss because the vinyl-modified epoxy ester resin does not have a condensed alicyclic structure.

### (Synthesis Example 10 and Synthesis Comparative Example 4: Preparation of solvent dispersion resin composition)

Epoxy ester resins having the compositions shown in Table 4 were prepared in the same manner as in Synthesis Example 1, and resin compositions (10) and (4') having a nonvolatile content of 70 mass% were produced using a solvent shown in Table 4.

**[Table 4]**

| | | | Synthesis Example 10 | Synthesis Comparative Example 4 |
|---|---|---|---|---|
| Epoxy ester resin | Dicyclopentadiene type epoxy resin | EPICLON HP-7200HHH | | |
| | | EPICLON HP-7200 | | |
| | | EPICLON HP-7200L | 32.52 | |
| | Bisphenol A type epoxy resin | EPICLON-1050 | | 47.00 |
| | Unsaturated fatty acid | Soybean oil fatty acid | 65.93 | 26.06 |
| | | Linseed oil fatty acid | | |
| | | Dehydrated castor oil fatty acid | | 26.06 |
| | Polyvalent carboxylic acid | Maleic anhydride | | |
| | | Phthalic anhydride | | 0.87 |
| | | Fumaric acid | 1.55 | |
| Organic solvent | Butyl acetate | | 42.84 | 42.84 |
| Epoxy ester resin | | Acid value [mgKOH/g] | 0 | 0 |
| | | Weight average molecular weight | 7,000 | 12,000 |

### (Example 19 and Comparative Example 7: Preparation of solvent coating composition, and formation and evaluation of coating film)

Using the prepared resin compositions (10) and (4'), coating compositions were prepared by the following method, coating films were formed, and their physical properties were evaluated.

30.7 parts by mass of each of the resulting resin compositions (10) and (4'), 25.0 parts by mass of titanium oxide ("Ti-Pure R-960" manufactured by Chemours), 25.0 parts by mass of calcium carbonate ("Super S" manufactured by Maruo Calcium Co., Ltd.), and 38.2 parts by mass of diluent (aromatic hydrocarbon solvent, "T-SOL100 FLUID" manufactured by ENEOS Corporation) were mixed and kneaded with a paint shaker for 60 minutes to obtain a kneaded base (non-volatile content: 60 mass%). 40.8 parts by mass of each of the resin compositions (10) and (4'), 0.6 parts by mass of a metal dryer ("DICNATE SG-160" manufactured by DIC Corporation), 0.5 parts by mass of a leveling agent ("BYK-333" manufactured by BYK), and 39.2 parts by mass of butyl acetate were further added to the resulting kneaded base, and mixed to obtain solvent coating compositions (3-10) and (3-4') having a nonvolatile content of 50 mass%.

The produced solvent coating compositions (3-10) and (3-4'), and coating films obtained using the solvent coating compositions (3-10) and (3-4') were evaluated in the same manner as above. Table 5 shows the results.

**[Table 5]**

| | Example 19 | Comparative Example 7 |
|---|---|---|
| Coating composition | (3-10) | (3-4') |
| Pigment dispersion stability | A | A |
| Gloss value [-] | 93 | 55 |
| Tack-free arrival time [min] | 50 | 50 |
| Substrate adhesion [%] | 100 | 100 |
| Adhesion after immersion in warm water [%] | 100 | 100 |
| Gloss retention rate [%] | 97 | 85 |
| Corrosion resistance | S | A |

From the results in Table 5, it can be understood that the coating film obtained from the solvent coating composition using the epoxy ester resin of the present invention as the binder resin is excellent in glossiness and corrosion resistance. On the other hand, in Comparative Example 7, it can be understood that the coating film does not have gloss because the epoxy ester resin does not have a condensed alicyclic structure.

## Claims

1. An epoxy ester resin comprising a polymerizable unsaturated group and a condensed alicyclic structure.

2. The epoxy ester resin according to claim 1, which is a reaction product of an epoxy resin having a condensed alicyclic structure and unsaturated fatty acid, or a reaction product of an epoxy resin having a condensed alicyclic structure, unsaturated fatty acid, and polyvalent carboxylic acid.

3. The epoxy ester resin according to claim 2, wherein the epoxy resin having a condensed alicyclic structure is a dicyclopentadiene type epoxy resin.

4. The epoxy ester resin according to claim 2 or 3, wherein an epoxy equivalent of the epoxy resin having a condensed alicyclic structure is in a range of 200 to 2,000 g/equivalent.

5. The epoxy ester resin according to any one of claims 2 to 4, wherein the unsaturated fatty acid is an unsaturated aliphatic monocarboxylic acid having 6 to 40 carbon atoms.

6. The epoxy ester resin according to any one of claims 2 to 5, wherein a molar ratio [(epoxy group):(carboxyl group)] of epoxy group of the epoxy resin having a condensed alicyclic structure to carboxyl group of the unsaturated fatty acid and the polyvalent carboxylic acid is in a range of 1:1 to 1:2.

7. The epoxy ester resin according to any one of claims 1 to 6, not comprising a bisphenol structure.

8. A vinyl-modified epoxy ester resin comprising a condensed alicyclic structure containing the epoxy ester resin according to any one of claims 1 to 7 and a polymerizable monomer as reaction components, wherein
a mass ratio [(epoxy ester resin):(polymerizable monomer)] of the epoxy ester resin having a polymerizable unsaturated group and a condensed alicyclic structure to the polymerizable monomer is in a range of 20:80 to 80:20.

9. The vinyl-modified epoxy ester resin according to claim 8, wherein the polymerizable monomer contains a polymerizable monomer having an acidic functional group, and further contains an aliphatic amine as the reaction component.

10. The vinyl-modified epoxy ester resin according to claim 8 or 9, having an acid value in a range of 20 to 60 mgKOH/g.

11. A resin composition comprising the epoxy ester resin according to any one of claims 1 to 7 or the vinyl-modified epoxy ester resin according to any one of claims 8 to 10.

12. The resin composition according to claim 11, comprising at least one pigment selected from the group consisting of metal silicates, metal carbonates, metal sulfates, metal phosphates, and metal phosphites.

13. The resin composition according to claim 11 or 12, which is an aqueous resin composition further containing water.

14. A paint which is the resin composition according to any one of claims 11 to 13.

15. An article comprising a coating film of the paint according to claim 14.
